(19) Europäisches Patentamt
European Patent Office
Office européen des brevets

(11) EP 1 545 210 B1

(12) EUROPEAN PATENT SPECIFICATION

(45) Date of publication and mention of the grant of the patent:
**24.01.2007 Bulletin 2007/04**

(21) Application number: **03793156.5**

(22) Date of filing: **20.08.2003**

(51) Int Cl.:
***A01N 43/50*** *(2006.01)*

(86) International application number:
**PCT/US2003/026034**

(87) International publication number:
**WO 2004/017736 (04.03.2004 Gazette 2004/10)**

# (54) STABLE, LOW FREE FORMALDEHYDE, SYNERGISTIC ANTIMICROBIAL COMPOSITIONS OF ALDEHYDE DONORS AND DEHYDROACETIC ACID

STABILE SYNERGISTISCHE ANTIMIKROBIELLE ZUSAMMENSETZUNGEN AUS ALDEHYDDONATOREN UND DESHYDROESSIGSÜURE MIT NIEDRIGEM GEHALT AN FREIEM FORMALDEHYD

COMPOSITIONS ANTIMICROBIENNES SYNERGIQUES STABLES A FAIBLE TENEUR EN FORMALDEHYDE LIBRE DE DONNEURS ALDEHYDE ET ACIDE DEHYDROACETIQUE

(84) Designated Contracting States:
**AT BE BG CH CY CZ DE DK EE ES FI FR GB GR HU IE IT LI LU MC NL PT RO SE SI SK TR**
Designated Extension States:
**LT LV**

(30) Priority: **20.08.2002 US 405036 P**

(43) Date of publication of application:
**29.06.2005 Bulletin 2005/26**

(73) Proprietor: **LONZA, INC.**
**Allendale, NJ 07401-1613 (US)**

(72) Inventors:
- **LUTZ, Patrick, Jay**
  **Nazareth, PA 18064 (US)**
- **TAFESH, Ahmed, M.**
  **Allentown, PA 18104 (US)**

(74) Representative: **Riegler, Norbert Hermann et al**
**Lonza AG**
**Patentabteilung**
**Postfach**
**4002 Basel (CH)**

(56) References cited:
**US-A- 5 405 862** **US-A- 6 143 204**

- **DATABASE CA [Online] CHEMICAL ABSTRACTS SERVICE, COLUMBUS, OHIO, US; GAZZANIGA, A. ET AL: "Controlled release of dehydroacetic acid sodium salt for the stability improvement of cosmetic formulations" retrieved from STN Database accession no. 122:38500 XP002262187 & INTERNATIONAL JOURNAL OF COSMETIC SCIENCE (1994), 16(3), 105-12 ,**
- **DATABASE CA [Online] CHEMICAL ABSTRACTS SERVICE, COLUMBUS, OHIO, US; BENASSI, C. A. ET AL: "Interaction between dehydroacetic acid sodium salt and formaldehyde: structural identification of the product" retrieved from STN Database accession no. 109:134818 XP002262188 cited in the application & JOURNAL OF THE SOCIETY OF COSMETIC CHEMISTS (1988), 39(2), 85-92 ,**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European Patent Convention).

EP 1 545 210 B1

## Description

### Field of the Invention

The present invention relates to stable, low free formaldehyde, synergistic antimicrobial mixtures of a first component including one or more aldehyde donor, a second component including a stabilizer; and a third component including dehydroacetic acid or salt thereof.

### Background of the Invention

The need for effective and economical preservative compositions is well known. Many products require the addition of a preservative to protect against contamination and growth of microbes. Examples of such products include personal care products such as shampoos, creams, lotions, cosmetics, and soaps; household products such as laundry detergents, hard surface cleaners, fabric softeners, and various industrial products; such as paint, wood, textiles, adhesives, sealants, leather, rope, paper pulp, plastics, fuel, oil, and rubber and metal working fluids. The control of slime-producing bacterial and fungi in pulp and paper mills and in cooling towers is also a matter of substantial commercial importance.

In particular, personal care product compositions provide a nutrient-rich media which benefit from the incorporation of preservatives to control the growth of microorganisms and to prevent spoilage. Generally, the shelf life of these products depends on the resistance to microbial spoilage of components contained therein. It is therefore desirable to formulate a preservative which controls microbial contamination in personal care products, household products, and industrial products.

Formaldehyde derivatives are known preservatives. For example, U.S. Patent No. 3,987,184 discloses 1,3-dimethylol-5,5-dimethylhydantoin (DMDMH) useful as a formaldehyde donor compound for the preservation of personal care products, cosmetics, and household and industrial products. U.S. Patent No. 5,405,862 teaches a formaldehyde donor composition containing dimethyloldimethylhydantoin, monomethyloldimethylhydantoin, and dimethylhydantoin having less than 0.1 % by weight of free formaldehyde based upon 100% of total composition, useful in biocidal effective amounts in industrial or personal care products. U.S. Patent No. 6,143,204 discloses a broad spectrum preservative composition having a dialkanol-substituted dimethylhydantoin, an iodopropynyl compound, a stabilizer of hydantoin, and a hydroxyl solvent. U.S. Patent No. 6,121,302 teaches a broad spectrum preservative having a dialkanol-substituted dimethylhydantoin, one or more isothiazolones, a hydantoin stabilizer and a hydroxyl solvent. Dehydroacetic acid or its salts thereof is also a known preservative, exhibiting both fungicidal and bactericidal activity.

While useful for controlling bacteria, fungi and other contamination in personal care and household products, these substances present a variety of limitations for such use including being unduly expensive; exhibiting limited antimicrobial or antifungal activity, or limited solubility in water; exhibiting undue pH dependence; adverse toxicological properties and skin sensitization or possible carcinogenicity; or they may be inactivated by commonly used materials. Furthermore, to obtain full microbiological control, a great amount of preservative must be added to the product, making it more difficult to formulate. Also, when large amounts of additive are used, the likelihood of a negative impact on that product, such as instability, odor, and breakdown of product is greater.

In light of the foregoing, it would be advantageous to formulate a broad spectrum antimicrobial composition which completely controls microbiological and fungal contamination in personal care products, household products, and industrial products. The antimicrobial composition should contain low free formaldehyde and iodine levels; and should be cost effective, stable, and suitable for use in personal care and household products. The antimicrobial composition should also be easy to formulate and effective at concentrations low enough so as not to adversely impact the product to which it is added.

### Summary of the Invention

In accordance with the invention, it has now been discovered that a stable, low free formaldehyde, synergistic antimicrobial combination of a first component including one or more aldehyde donor, a second component including a stabilizer selected from the group consisting of hydantoins, their derivatives, urea and its derivatives, and a third component including dehydroacetic acid or salt thereof, gives both broad spectrum bactericidal and fungicidal activity suitable for use in personal care products, household products, and various industrial products and systems. Preferably, the first component includes one or more alkanol-substituted dimethylhydantoin, and the second component includes a stabilizer of dimethyl-hydantoin. Particular advantages of the antimicrobial composition of the invention are the low amounts of free formaldehyde, i.e., less than 0.2%

By combining these components in products which require protection against microbial attack, an antimicrobial composition which completely controls microbiological contamination is obtained. Furthermore, due to the synergistic

effect of the components, much less active material of each component is required as opposed to when each component is used alone. Another advantage of the synergistic antimicrobial composition is that it is able to fully control a broader spectrum of bacteria and fungi than any of the individual components. A further advantage is that the antimicrobial composition requires no iodine which at high levels is considered toxic. Accordingly, this antimicrobial composition is economical, requiring lesser amounts of expensive components, easy to use, and less likely to have toxic or skin sensitizing effects on individuals exposed to the product.

A particularly advantageous aspect of the invention is that a small amount of dehydroacetic acid (DHA) in combination with one or more aldehyde donor, and a stabilizer such as dimethylhydantoin forms a stable composition. This activity could in no way be predicted based on the known reaction of dehydroacetic acid sodium salt with formaldehyde released from aldehyde donors in aqueous solution. The interaction and declining levels of dehydroacetic acid sodium salt was shown by NMR analysis in literature in the Journal of Society of Cosmetic Chemists, entitled "Dehydroacetic acid sodium salt stability in cosmetic preservative mixtures," by C.A. Bennassi, et al., Vol. 10, pp. 29-37 (1988). This reaction forms an unstable composition, decreasing levels of DHA, thereby eliminating the fungicidal and bactericidal effect of DHA. Inclusion of a stabilizer such as dimethylhydantoin serves to minimize the amount of free formaldehyde, thus eliminating the reaction of free formaldehyde with DHA.

Another advantage is that the antimicrobial composition of the invention remains stable and does not freeze at temperatures as low as -15° C. The more solids there are in a mixture, the more likely that the freezing point of the mixture will be increased. A typical hydantoin, and a typical hydantoin in combination with a dehydroacetic acid or salt thereof, freezes at -15°, C. Therefore, it would be likely that the antimicrobial composition, containing more solids than a typical hydantoin or typical hydantoin in combination with DHA, would freeze at -15° C. However, the antimicrobial composition does not freeze or form crystals at -15° C; thus, this activity could in no way be predicted as a typical hydantoin, and a typical hydantoin in combination with a dehydroacetic acid or salt thereof forms crystals at -15° C.

The antimicrobial composition may be used in personal care products such as shampoos, conditioners, rinses, creams, lotions, dental care products such as mouthwash, toothpaste, spray, and denture cleaners or soaks, baby wipes and other woven and non-woven wipes; household products such as detergents, hard surface cleaners, fabric softeners, and the like; and industrial products such as paint, wood, wood treatment, paper board, sheet rock, paper pulp, ceiling tiles, textiles, adhesives, sealants, leather, rope, plastics, petroleum, fuel, oil, and rubber and metal working fluids; or industrial systems such as pulp and papermaking processing, water treatment systems, cooling water, swimming pools and spas, decorative fountains, membranes, brewery pastures, toilet and urinal applications, food and beverage sanitation, sporicidal formulations, sterilization of clinical products and surgical instruments, and preservation including clay slurry and starch. The antimicrobial composition can be added to the aforementioned products or systems already formulated or the three components can be added to the products or systems separately.

The components of the synergistic antimicrobial composition are easy to formulate and may be added to an article or system to be treated as separate entities, or as a combination. The components are physically and chemically compatible and may be combined with carriers and excipients.

Methods for inhibiting the growth of or reducing microorganisms in personal care, household, or industrial products or systems are also provided by this invention.

Personal care products, household products, and industrial products comprising the antimicrobial composition are further provided by this invention.

## Detailed Description of the Invention

As used herein, the phrases "antimicrobial," "biocidal," and "inhibiting microbial growth" describe the killing of, as well as the inhibition of, or control of, the growth of bacteria, yeasts, fungi, and algae.

As used herein, the phrase "microbiological contamination" describes contamination against microbes including bacteria, yeasts, fungi, and algae.

An "antimicrobial effective amount" is an amount effective to inhibit the growth of and/or kill microorganisms. The first component of the antimicrobial composition includes one or more aldehyde donor.

### Aldehyde and Aldehyde Donor

The term "aldehyde" refers to any compound that has an aldehyde group, especially those aldehydes that exhibit antimicrobial activity, such as formaldehyde, orthophthalaldehyde, cinnamaldehyde, and mixtures thereof.

The term "aldehyde donor" as used herein is defined as any material which is not an aldehyde but upon aqueous dilution liberates a compound which gives positive reactions with aldehyde identifying reagents, i.e., a compound which can identify aldehyde groups. Generally the liberated compound has the formula:

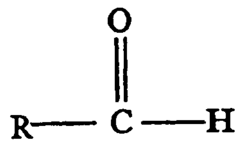

or

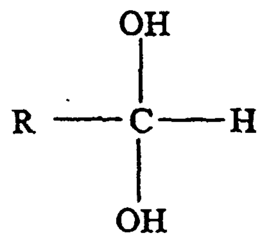

where R is any functional group. In other words, the term "aldehyde donor" includes any compound which is not an aldehyde but when hydrolyzed forms an aldehyde or a compound which gives positive reactions with aldehyde identifying reagents. Examples of aldehyde identifying reagents include, but are not limited to, Benedicts solution, Tollens reagent, and acetylacetone.

Suitable aldehyde donors include, but are not limited to, imidazolidinyl urea, Quaternium-15, diazolidinyl urea, bromonitropropanediol, methenamine, 5-bromo-5-nitro-1,3-dioxane, sodium hydroxymethylglycinate, formalin, glutaraldehyde, polymethoxy bicyclic oxazolidine, 3,5-dimethyl-1,3,5,2H-tetrahydrothiadiazine-2-thione, hexahydro-1,3,5-tris (2-hydroxyethyl)triazine, hexahydro-1,3,5-triethyl-s-triazine, methylolhydantoins, tetrakis(hydroxymethyl)phosphonium sulfate, and any combination of any of the foregoing.

Preferred aldehyde donors include, but are not limited to alkanol-substituted dimethylhydantoins having the formula:

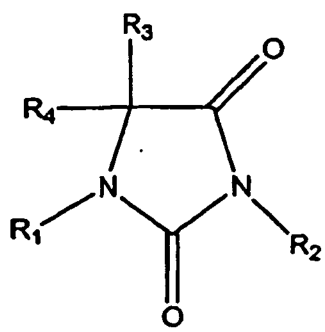

wherein $R_1$ and $R_2$ are each independently hydrogen or $(CH_2)OH$, with the proviso that both $R_1$ and $R_2$ cannot both be hydrogen, and $R_3$ and $R_4$ are each independently hydrogen, a methyl group, and ethyl group, a propyl group, or an aryl group.

Alkanol-substituted dimethylhydantoin compounds include those described in U.S. Patent Nos. 3,987,184 and 4,172,140. These are condensation products of 5,5-dimethylhydantoin (DMH) with one or more moles of formaldehyde (e.g. 1,3-dimethylol-5,5-dimethylhydantoin (DMDMH), 1-methylol-5,5-dimethylhydantoin (MMDMH), or 3-methylol-5,5-dimethylhydantoin and 1-methylol-3-methyloloxymethylene-5,5-dimethylhydantoin, and mixtures thereof). Mixtures of alkanol-substituted DMH compounds can also be used. Preferred mixtures include, but are not limited to, Glydant 2000®, a 70% solution of hydantoin species including about 36% dimethyloldimethylhydantoin (DMDMH), about 29% monomethyloldimethylhydantoin (MMDMH), and about 5% dimethylhydantoin (DMH); and 30% water, available from Lonza Inc. of Allendale, New Jersey. Glydant 2000® has a total formaldehyde content of 17%. Dantogard®2000 is a 70% solution of equilibrated dimethyloldimethylhydantoin (DMDMH), monomethyloldimethylhydantoin (MMDMH), and dimethylhydantoin (DMH), (17% total formaldehyde content), available from Lonza Inc. of Allendale, New Jersey.

The second component includes stabilizers including hydantoins and their derivatives. The hydantoins are represented by formula:

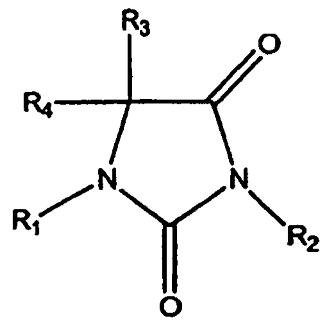

where $R_1$ to $R_4$ are independently selected from H, and a $C_1$ to $C_6$ alkyl group. Preferably the stabilizer is 5,5-dimethylhydantoin.

The stabilizers used in the invention may also include urea and its derivatives.

The third component includes dehydroacetic acid or its salts thereof; for example, dehydroacetic acid sodium salt.

Water is the preferred solvent for use in the present invention. Optionally, a hydroxyl solvent can be used which includes mono-, di-, and polyhydroxyl alcohols. For example, monohydroxyl alcohols having from about 1 to 5 carbon atoms, most preferably ethanol and propanol, may be used. Dihydroxyl alcohols (e.g., glycols) such as $C_2$ to $C_8$ diols (e.g., propylene glycol and butylene glycol) are advantageous. Other compounds which can be used include dipropylene glycol, glycerin, diglycerin, PPG-9, PPG02-buteth-2, butoxypropanol, butoxydiglycol, PPG-2 butyl ether, glycereth-7, sorbitol, isopentyldiol, myristyl myristate, and phenoxyethanol.

This formulation has a free formaldehyde concentration of less than 1 % by weight, preferably less than 0.5, 0.2, or 0.1 % by weight. Total formaldehyde concentration is from 5% to 25% by weight and preferably from 12 % to 18% by weight. Preferably, the blend contains little or no free formaldehyde. Low free formaldehyde compositions reduce workplace exposure risk to formaldehyde resulting in greater safety and reduced regulatory issues.

Table 1 provides ranges for the broad spectrum synergistic antimicrobial composition concentrates of the invention.

| Broad Spectrum Synergistic Antimicrobial Composition Concentrates | | |
|---|---|---|
| | Broad wt. % range | Preferred wt. % range |
| aldehyde donor | 5-95 | 50-75 |
| stabilizer | 5-20 | |
| DHA | 0.5-95 | 2-30 |

The ratio of the aldehyde donor to DHA or salt thereof for the broad spectrum concentrate may broadly be from 1:100 to 100:1, preferably from 1:60 to 60:1, and more preferably from 0.05:30 to 30:0.05 and the ratio of stabilizer, such as dimethylhydantoin, to aldehyde donor sufficient to minimize the amount of free formaldehyde, thus reducing or preventing the reaction of free formaldehyde with DHA.

The preservative concentrates of the invention can be readily prepared in accordance with procedures well known to those skilled in the art, simply by mixing the components set forth in Table 1, supra, and adjusting the pH using any organic or mineral acid (e.g., hydrochloric acid and acetic acid) suitable for the user's purpose. The manner in which the components are mixed can be modified to suit the needs of the formulator, as discussed below, without departing from the spirit of the invention.

The concentration of the active compounds in the use dilution depends on the nature of the microorganisms to be combated and the composition of the final product to be preserved. For example, the optimum amount of antimicrobial composition to use for preserving an aqueous composition can be determined by means of screening tests known in the art, and in accordance with the formulation ranges provided in Table 1. When preserving an aqueous composition, the use level is generally 0.00005% (0.5 ppm) to 5% (50,000 ppm) by weight, preferably from 0.01% (100 ppm) to 1 % (10,000 ppm) of the final composition. Preservative formulations of the invention can also be used directly as they are manufactured without dilution, or in any other manner traditionally used in manufacturing, such as by metering.

Antimicrobial compositions of this invention may be used directly as they are manufactured, without dilution. They may be poured into small batches (from one to thousands of pounds) of product at any point in its manufacture. Also, the antimicrobial compositions may be pumped into medium sized batches (from thousands to tens of thousands of pounds).

The antimicrobial composition of the invention may also be metered continuously from a storage tank into large sized production runs (from tens of thousands to millions of pounds) in systems custom-designed to continuously mix all the components of the finished product at approximately the same rate that it is filled into its final package. The blending elements of continuous mixers are mostly shaped in the form of spirals or screws, effecting on rotation both a mixing and a transport of the product composition.

Because start-up is very labor-intensive, to insure all the metering equipment is properly calibrated, these systems are generally used only for very high volume, long and continuous production runs.

In another embodiment of the invention, the stabilizer may be combined with the DHA. A hydroxyl solvent may be added if desired. The resulting composition can be used in making the antimicrobial composition of the invention by mixing it with one or more aldehyde donor, such as alkanol-substituted dimethylhydantoin.

In the antimicrobial composition containing both active ingredients, the stabilizer DMH also serves to minimize the amount of free formaldehyde in the composition. In some instances, the amount of DMH typically present in alkanol-substituted dimethylhydantoin compositions is not sufficient to stabilize DHA where two active ingredients are used. Therefore, when formulating a stabilized antimicrobial composition of the invention, the total alkylhydantoin concentration must be considered in determining how much alkylhydantoin should be added to stabilize the DHA. The total alkylhydantoin concentration is equal to free alkylhydantoin plus reacted alkylhydantoin (e.g., the DMH in the condensation products MMDMH and DMDMH).

The "total" alkylhydantoin concentration is different from the "added" alkylhydantoin concentration. Since alkylhydantoin (free and reacted) may be present in certain alkanol-substituted dimethylhydantoin compositions, an amount of alkylhydantoin may be added to achieve a stabilizing amount for DHA. Thus in one embodiment alkylhydantoin is added to a prepared alkanol-substituted dimethylhydantoin composition (e.g., Glydant 2000®) that contains free and reacted alkylhydantoin, such that the added alkylhydantoin in combination with the alkylhydantoin in the alkanol-substituted dimethylhydantoin composition provide a total alkylhydantoin concentration that stabilizes DHA.

Glydant® is a 55% solution of 1,3-dimethylol-5,5-dimethylhydantoin (DMDMH) available from Lonza, Inc. of Allendale, New Jersey.

A synergistic effect is a response to a combination of two or more components that produce an effect greater than the sum of their individual effects. One method for determining whether a composition exhibits a synergistic effect is the method described in C.E. Kull *et al.,* "Mixtures of Quaternary Ammonium Compounds and Long-chain Fatty Acids as Antifungal Agents", *Applied Microbiology,* 9:538-541 (1961). The synergism value is determined by the formula:

$$Q_A/Q_a + Q_B/Q_b$$

where $Q_A$ is the quantity of Compound A in mixture, producing an endpoint; $Q_a$ is the quantity of Compound a acting alone, producing an endpoint; $Q_B$ is the concentration of Compound B in the mixture, producing an endpoint. $Q_b$ is the concentration of Compound b acting alone, producing an endpoint.

When the value of $(Q_A/Q_a + Q_B/Q_b)$ is less than one, the mixture is synergistic. Values for $(Q_A/Q_a + Q_B/Q_b)$ of 1 and greater than 1, represent an additive effect and an antagonistic effect, respectively. According to this method of measuring synergism, the quantity of each component in the various mixtures is compared with the quantity of pure component that is required to reach the same endpoint or to produce the same microbiological effect as the mixture.

The synergistic antimicrobial composition of the present invention is useful as an antimicrobial agent in personal care products, dental products, household products, and industrial products and systems.

The following examples are illustrative of the antimicrobial composition, however, it is understood that the invention is not limited to the specific details set forth in the examples.

Table 2

| Freezer Stability of NaDHA.H2O in Glydant 2000® and Glydant® | | |
|---|---|---|
| | 10% NaDHA.H2O in Glydant 2000® | 10% NaDHA.H2O in Glydant® |
| 18 hours | OK-no crystals | Top 1/3: loose crystals (frozen) |
| 48 hours | OK-no crystals | Top 1/3: loose crystals (frozen) |

**Preservative Challenge Test Results against Mixed Bacteria in Anionic Protein Shampoo**

Mixed bacteria challenge tests were performed by adding approximately 1-5×$10^6$ organisms per gram of formulation, the organisms comprising an equally divided mixture of Staphylococcus aureus (ATCC No. 6538), Pseudomonas aeruginosa (ATCC No. 9027), and Escherichia coli (ATCC No. 8739) incubated at ~ 36˚C on nutrient agar slants 24 hours prior to testing. The test samples were incubated at ~ 23˚C (room temperature) for the number of days indicated, after which an aliquot of the sample was taken and diluted stepwise to a $10^6$ fold reduction in concentration. The diluted samples were plated out on tryptic soy agar and incubated for 48 hours at ~ 36˚C. After incubation, readings of the total number of colony forming units per gram (cfu/g) were made on the samples. Table 3 illustrates the levels at which the individual components Glydant®2000 and DHA are effective and ineffective against bacteria.

Table 3

| Preservative Challenge Test Results against Mixed Bacteria[1] in Anionic Protein Shampoo | | | |
|---|---|---|---|
| % Preservative as supplied | Day 0 cfu/g. | Day 7 cfu/g. | Day 14 cfu/g. |
| 0.05 % Glydant 2000® | 3.0 x $10^6$ | 2.4 x $10^2$ | < 10 |
| 0.025 % Glydant 2000® | 3.0 x $10^6$ | 1.1 x $10^5$ | 1.3 x $10^7$ |
| 0.0125% Glydant 2000® | 3.0 x $10^6$ | 3.0 x $10^7$ | 7.3 x $10^7$ |
| | | | |
| 0.20% DHA | 3.0 x $10^6$ | 1.0 x $10^3$ | < 10 |
| 0.150% DHA | 3.0 x $10^6$ | 8.0 x $10^3$ | 1.0 x $10^6$ |
| | | | |
| 0.025 % Glydant 2000® + 0.075% DHA | 3.0 x $10^6$ | 2.0 x $10^3$ | < 10 |
| | | | |
| Unpreserved | 3.0 x $10^6$ | 3.0 x $10^7$ | 3.0 x $10^7$ |
| [1] An equal mixture of Staphylococcus aureus (ATCC No. 6538). Pseudomonas aeruginosa (ATCC No. 9027), and Escherichia coli (ATCC No. 8739).<br>cfg/g = Colony forming units in 1 gram. | | | |

Table 4

| Synergy at Day 14 | | | | | | |
|---|---|---|---|---|---|---|
| Sample | $Q_A$ | $Q_B$ | $Q_a$ | $Q_b$ | $\frac{Q_A}{Q_a} + \frac{Q_B}{Q_b}$ | $\leq 1$ = Synergy |
| 0.05 % Glydant 2000® | | | 0.05 % Glydant 2000® | | | |
| 0.2% DHA | | | | 0.2% DHA | | |
| 0.025% Glydant 2000® + 0.075 % DHA | 0.025% | 0.075% | | | $\frac{0.025}{0.05} + \frac{0.075}{0.2}$ | 0.5 + 0.37 = 0.87 Synergy |

Thus, the antimicrobial composition described herein provides a method for inhibiting the growth of or reducing microorganisms such as bacteria and fungi in a wide variety of compositions, i.e., personal care products, household products, and industrial products and systems. The antimicrobial composition eliminates the need for iodine, while at the same time utilizing ultra-low free formaldehyde compositions in combination with DHA or DHA.Na which is fungicidal and bactericidal.

## Claims

1. An antimicrobial composition comprising a synergistic antimicrobial effective amount of a mixture of:

   (a) a first component including one or more aldehyde donor;
   (b) a second component including a stabilizer selected from the group consisting of hydantoins, their derivatives, urea and its derivatives; and
   (c) a third component including dehydroacetic acid or a salt thereof.

2. The composition of claim 1 wherein the dehydroacetic acid salt is dehydroacetic acid sodium salt.

3. The composition of claim 1 wherein the aldehyde donor is an alkanol-substituted dimethylhydantoin selected from the group consisting of 1,3-dimethylol-5,5-dimethylhydantoin, 1-methylol-5,5-dimethylhydantoin, 3-methylol-5,5-dimethylhydantoin, 1-methylol-3-methyloloxymethylene-5,5-dimethylhydantoin, 1,3-dimethyloloxymethyiene-5,5-dimethylhydantoin, or mixtures thereof.

4. The composition of claim 3, wherein the alkanol-substituted dimethylhydantoin is a mixture of dimethyloldimethylhydantoin and monomethyloldimethylhydantoin.

5. The composition of claim 1, wherein the aldehyde donor is selected from the group consisting of imidazolidinyl urea, Quaternium-15, diazolidinyl urea, bromonitropropanediol, methenamine, 5-bromo-5-nitro-1,3-dioxane, sodium hydroxymethylglycinate, formalin, glutaraldehyde, polymethoxy bicyclic oxazolidine, 3,5-dimethyl-1,3,5,2H-tetrahydrothiadiazine-2-thione, hexahydro-1,3,5-tris(2-hydroxyethyl)triazine, hexahydro-1,3,5-triethyl-s-triazine, methylolhydantoins, tetrakis(hydroxymethyl)phosphonium sulfate, or mixtures thereof.

6. The composition of claim 1 wherein the stabilizer is dimethylhydantoin.

7. The composition of claim 1, wherein the mixture is substantially free of iodine.

8. The composition of claim 1, wherein the mixture has a free formaldehyde concentration of less than 0.2% by weight, based on 100% weight of the mixture.

9. The composition of claim 1 wherein the first component is present in the mixture in an amount of between 20% and 95% by weight, based on 100% by weight of the mixture.

10. The composition of claim 1 wherein the second component is present in the mixture an amount of between 5% and 20% by weight, based on 100% weight of the mixture.

11. The composition of claim 1 wherein the third component is present in the mixture in an amount of between 0.5% and 40% by weight, based on 100% weight of the mixture.

12. A method of preparing a synergistic antimicrobial composition which comprises blending 20 to 95 parts of an aldehyde donor and 5 to 20 parts of a stabilizer selected from the group consisting of hydantoins, their derivatives, urea and its derivatives to form a homogeneous mixture, mixing a solvent and 1 to 40 parts of DHA or a salt thereof with the foregoing mixture to obtain a homogeneous solution containing a total formaldehyde content of at least 2% and less than 0.2 % free formaldehyde.

13. A method of inhibiting the growth of or reducing microorganisms comprising applying a synergistically antimicrobial effective amount of the composition of claim 1.

14. A method of inhibiting the growth of or reducing microorganisms in personal care products such as shampoos, conditioners, rinses, creams, lotions, cosmetics, soaps, dental products such as mouthwash, toothpaste, spray, denture cleaners and denture soaks, baby wipes and other woven and non-woven wipes; household products such as laundry detergents, hard surface cleaners, fabric softeners; and industrial products such as paint, wood, wood treatment, paper board, sheet rock, paper pulp, ceiling tiles, textiles, adhesives, sealants, leather, rope, plastics, petroleum, fuel, oil, and rubber and metal working fluids; comprising applying an effective amount of the composition of claim 1 to the personal care product, household product, or industrial product.

**15.** A method of inhibiting the growth of or reducing microorganisms in industrial systems such as pulp and papermaking processing; water treatment systems; cooling water; swimming pools and spas; decorative fountains; membranes; brewery pastures; toilet and urinal applications; food and beverage sanitation; sporicidal formulations; sterilization of clinical products and surgical instruments, and preservation, including clay slurry and starch, comprising applying an effective amount of the composition of claim 1 to the industrial system.

**16.** A personal care, household, or industrial product comprising the composition of claim 1.

**17.** A personal care, household, or industrial product which comprises an effective amount of a mixture of a first component including one or more aldehyde donor, and a second component including dimethylhydantoin, and a third component including dehydroacetic acid.

**18.** The product of claim 17 wherein the product is a household or industrial product selected from the group consisting of fabric softeners, laundry detergents, hard surface cleaners, paint, wood, wood treatment, paper board, sheet rock, paper pulp, ceiling tiles, textiles, adhesives, sealants, leather, rope, plastics, petroleum, fuel, oil, and rubber and metal working fluids.

**19.** The product of claim 17 wherein the product is a personal care product selected from the group consisting of shampoos, conditioners, rinses, creams, lotions, cosmetics, soaps, mouthwash, toothpaste, spray, denture cleaners and denture soaks, baby wipes and other woven and non-woven wipes.

**Patentansprüche**

**1.** Antimikrobielle Zusammensetzung, umfassend eine synergistische antimikrobiell wirksame Menge einer Mischung aus

(a) einer ersten Komponente, welche einen oder mehrere Aldehyddonoren umfasst,
(b) einer zweiten Komponente, welche einen aus der aus Hydantoinen, deren Derivaten, Harnstoff und dessen Derivaten bestehenden Gruppe ausgewählten Stabilisator umfasst, und
(c) einer dritten Komponente, welche Dehydracetsäure oder eines ihrer Salze umfasst.

**2.** Zusammensetzung nach Anspruch 1, worin das Salz der Dehydracetsäure Dehydracetsäure-Natriumsalz ist.

**3.** Zusammensetzung nach Anspruch 1, worin der Aldehyddonor ein aus der aus 1,3-Dimethylol-5,5-dimethylhydantoin, 1-Methylol-5,5-dimethylhydantoin, 3-Methylol-5,5-dimethylhydantoin, 1-Methylol-3-methyloloxymethylen-5,5-dimethylhydantoin 1,3-Dimethyloloxymethylen-5,5-dimethylhydantoin und deren Mischungen bestehenden Gruppe ausgewähltes alkanolsubstituiertes Dimethylhydantoin-ist.

**4.** Zusammensetzung nach Anspruch 3, worin das alkanolsubstituierte Dimethylhydantoin ein Gemisch aus Dimethyloldimethylhydantoin und Monomethyloldimethylhydantoin ist.

**5.** Zusammensetzung nach Anspruch 1, worin der Aldehyddonor aus der aus Imidazolidinyl Urea, Quaternium-15, Diazolidinyl Urea, Bromnitropropandiol, Methenamine, 5-Brom-5-nitro-1,3-dioxan, Sodium Hydroxymethylglycinate, Formalin, Glutaraldehyd, Polymethoxy Bicyclic Oxazolidine, 3,5-Dimethyl-1,3,5,2*H*-tetrahydrothiadiazin-2-thion, Hexahydro-1,3,5-tris(2-hydroxyethyl)triazin, Hexahydro-1,3,5-s-triazin, Methylolhydantoinen, Tetrakis(hydroxymethyl)phosphoniumsulfat und deren Mischungen bestehenden Gruppe ausgewählt ist.

**6.** Zusammensetzung nach Anspruch 1, worin der Stabilisator Dimethylhydantoin ist.

**7.** Zusammensetzung nach Anspruch 1, worin die Mischung im wesentlichen iodfrei ist.

**8.** Zusammensetzung nach Anspruch 1, worin die Mischung eine Konzentration von freiem Formaldehyd von weniger als 0,2 Gew.-%, bezogen auf 100 Gew.-% Mischung, besitzt.

**9.** Zusammensetzung nach Anspruch 1, worin die erste Komponente in der Mischung in einer Menge von zwischen 20 Gew.-% und 95 Gew.-%, bezogen auf 100 Gew.-% Mischung, vorhanden ist.

**10.** Zusammensetzung nach Anspruch 1, worin die zweite Komponente in der Mischung in einer Menge von zwischen 5 Gew.-% und 20 Gew.-%, bezogen auf 100 Gew.-% Mischung, vorhanden ist.

**11.** Zusammensetzung nach Anspruch 1, worin die dritte Komponente in der Mischung in einer Menge von zwischen 0,5 Gew.-% und 40 Gew.-%, bezogen auf 100 Gew.-% Mischung, vorhanden ist.

**12.** Verfahren zur Herstellung einer synergistischen antimikrobiellen Zusammensetzung, umfassend das Mischen von 20 bis 95 Teilen eines Aldehyddonors und 5 bis 20 Teilen eines Stabilisators, ausgewählt aus der aus Hydantoinen, deren Derivaten, Harnstoff und dessen Derivaten bestehenden Gruppe, zur Bildung einer homogenen Mischung, und das Mischen eines Lösungsmittels und 1 bis 40 Teilen DHA oder eines ihrer Salze mit der vorerwähnten Mischung, um eine homogene Lösung mit einem gesamten Formaldehydgehalt von mindestens 2% und weniger als 0,2% freiem Formaldehyd zu erhalten.

**13.** Verfahren zur Verhinderung des Wachstums oder zur Verringerung von Mikroorganismen, umfassend die Anwendung einer synergistischen antimikrobiell wirksamen Menge der Zusammensetzung gemäss Anspruch 1.

**14.** Verfahren zur Verhinderung des Wachstums oder zur Verringerung von Mikroorganismen in Körperpflegeprodukten wie Shampoos, Haarpflegemitteln, Haarspülungen, Cremes, Lotionen, Kosmetika, Seifen, Dentalprodukten wie Mundspülungen, Zahnpasta, Mundspray, Zahnprothesenreinigern und flüssigen Zahnprothesenpflegemitteln, Babywischtüchem und anderen gewebten und Faserstoff Wischtüchern, Haushaltsprodukten wie Textilwaschmitteln, Reinigern für harte Oberflächen und Weichspülern, und industriellen Produkten wie Anstrichstoffen, Holz, Holzbehandlungsmitteln, Pappe, Gipskarton, Papiermasse, Deckenplatten, Textilien, Klebstoffen, Dichtungsmitteln, Leder, Seilwaren, Kunststoffen, Petroleum, Brennstoffen, Öl und Flüssigkeiten für die Kautschukverarbeitung und Kühlschmierstoffen, umfassend die Anwendung einer wirksamen Menge der Zusammensetzung gemäss Anspruch 1 auf das Körperpflegeprodukt, Haushaltsprodukt oder industrielle Produkt.

**15.** Verfahren zur Verhinderung des Wachstums oder zur Verringerung von Mikroorganismen in industriellen Systemen wie Papiermasseverarbeitung und Papierherstellung, Wasserbehandlungssystemen, Kühlwasser, Schwimmbekken und Wellnessbädern, Zierbrunnen, Membranen, Brauereigärten, Toiletten- und Urinalanwendungen, Speisen- und Getränkehygiene, sporozide Formulierungen, Sterilisation von Klinikbedarf und chirurgischen Instrumenten, und Konservierung, einschliesslich Tonschlicker und Stärke, umfassend die Anwendung einer wirksamen Menge der Zusammensetzung gemäss Anspruch 1 auf das industrielle System.

**16.** Körperpflegeprodukt, Haushaltsprodukt oder industrielles Produkt, welches die Zusammensetzung gemäss Anspruch 1 umfasst.

**17.** Körperpflegeprodukt, Haushaltsprodukt oder industrielles Produkt, welches eine wirksame Menge einer Mischung einer ersten Komponente, die einen oder mehrere Aldehyddonoren beinhaltet, und einer zweiten Komponente, welche Dimethylhydantoin beinhaltet, und einer dritten Komponente, welche Dehydracetsäure beinhaltet, umfasst.

**18.** Produkt nach Anspruch 17, worin das Produkt ein Haushalts- oder industrielles Produkt, ausgewählt aus der Gruppe bestehend aus Weichspülern, Textilwaschmitteln, Reinigern für harte Oberflächen, Anstrichstoffen, Holz, Holzbehandlungsmitteln, Pappe, Gipskarton, Papiermasse, Deckenplatten, Textilien, Klebstoffen, Dichtungsmitteln, Leder, Seilwaren, Kunststoffen, Petroleum, Brennstoffen, Öl und Flüssigkeiten für die Kautschukverarbeitung und Kühlschmierstoffen ist.

**19.** Produkt nach Anspruch 17, worin das Produkt ein Körperpflegeprodukt ausgewählt aus der Gruppe bestehend aus Shampoos, Haarpflegemitteln, Haarspülungen, Cremes, Lotionen, Kosmetika, Seifen, Mundspülungen, Zahnpasta, Mundspray, Zahnprothesenreinigern und flüssigen Zahnprothesenpflegemitteln, Babywischtüchern und anderen gewebten und Faserstoff-Wischtüchem ist.

## Revendications

**1.** Composition antimicrobienne comprenant une quantité antimicrobienne synergique efficace d'un mélange de :

(a) un premier composant comprenant un ou plusieurs donneurs d'aldéhyde;
(b) un second composant comprenant un stabilisateur choisi parmi le groupe constitué par des hydantoïnes,

leurs dérivés, de l'urée et ses dérivés ; et
(c) un troisième composant comprenant de l'acide déhydro-acétique ou un sel de celui-ci.

**2.** Composition selon la revendication 1, dans laquelle le sel de l'acide déhydro-acétique est un sel de sodium de l'acide déhydro-acétique.

**3.** Composition selon la revendication 1, dans laquelle le donneur d'aldéhyde est un diméthylhydantoïne à alcanol substitué choisi parmi le groupe constitué du 1,3-diméthylol-5,5-diméthylhydantoïne, du 1-méthylol-5,5-diméthylhydantoïne, du 3-méthylol-5,5-diméthylhydantoïne, du 1-méthylol-3-méthyloloxyméthylène-5,5-diméthylhydantoine, du 1,3-diméthyloloxyméthylène-5,5-diméthylhydantoïne ou de mélanges de ceux-ci.

**4.** Composition selon la revendication 3, dans laquelle le diméthylhydantoïne à alcanol substitué est un mélange de diméthyloldiméthylhydantoïne et de monométhyloldiméthylhydantoïne.

**5.** Composition selon la revendication 1, dans laquelle le donneur d'aldéhyde est choisi parmi le groupe constitué de l'Imidazolidinyl Urea, du Quaternium-15, de la Diazolidinyl Urea, du bromonitropropanediol, de la Methenamine, du 5-bromo-5-nitro-1,3-dioxane, de Sodium Hydroxymethylglycinate, de la formaline, du glutaraldéhyde, de la Polymethoxy Bicyclic Oxazolidine, de la 3,5-diméthyl-1,3,5-2*H*-tétrahydrothiadiazine-2-thione, de l'hexahydro-1,3,5-tris (2-hydroxyéthyl)triazine, de l'hexahydro-1,3,5-triéthyl-*s*-triazine, de méthylolhydantoïnes, du sulfate de tétrakis(hydroxyméthyl)phosphonium ou de mélanges de ceux-ci.

**6.** Composition selon la revendication 1, dans laquelle le stabilisateur est du diméthylhydantoïne.

**7.** Composition selon la revendication 1, dans laquelle le mélange est sensiblement exempt d'iode.

**8.** Composition selon la revendication 1, dans laquelle le mélange comprend une concentration de formaldéhyde libre inférieure à 0,2 % en poids, basée sur 100 % en poids du mélange.

**9.** Composition selon la revendication 1, dans laquelle le premier composant est présent dans le mélange en une quantité entre 20 % et 95 % en poids, basée sur 100 % en poids du mélange.

**10.** Composition selon la revendication 1, dans laquelle le second composant est présent dans le mélange en une quantité entre 5 % et 20 % en poids, basée sur 100 % en poids du mélange.

**11.** Composition selon la revendication 1, dans laquelle le troisième composant est présent dans le mélange en une quantité entre 0,5 % et 40 % en poids, basée sur 100 % en poids du mélange.

**12.** Procédé de préparation d'une composition antimicrobienne synergique qui comprend le mélange de 20 à 95 parties d'un donneur d'aldéhyde et de 5 à 20 parties d'un stabilisateur choisi parmi le groupe constitué d'hydantoïnes et de leurs dérivés, d'urée et de ses dérivés, pour former un mélange homogène, le mélange d'un solvant et de 1 à 40 parties de DHA ou un sel de celui-ci avec le mélange précédent pour obtenir une solution homogène ayant une teneur totale en formaldéhyde d'au moins 2 % et une teneur en formaldéhyde libre inférieure à 0,2 %.

**13.** Procédé d'inhibition de la croissance de micro-organismes ou de réduction de micro-organismes comprenant l'application d'une quantité antimicrobienne efficace de manière synergique de la composition selon la revendication 1.

**14.** Procédé d'inhibition de la croissance de micro-organismes ou de réduction des micro-organismes dans des produits de soins personnels tels que des shampooings, des après-shampooings, des rinçages, des crèmes, des lotions, des produits cosmétiques, des savons, des produits dentaires tels qu'un bain de bouche, de la pâte dentifrice, un vaporisateur, des nettoyants pour prothèses dentaires et des bains pour prothèses dentaires, des lingettes pour bébé et d'autres lingettes tissées ou non tissées ; des produits ménagers tels que des détergents à lessive, des produits de nettoyage pour surfaces, des produits assouplissants ; et des produits industriels tels que de la peinture, du bois, des produits de traitement pour le bois, du carton, des panneaux de plâtre, de la pâte à papier, des tuiles de plafond, des textiles, des adhésifs, des enduits d'étanchéité, du cuir, de la corde, des plastiques, du pétrole, du carburant, de l'huile et des fluides de travail pour du caoutchouc et des métaux ; comprenant l'application d'une quantité efficace de la composition selon la revendication 1 au produit de soins personnels, au produit ménager ou au produit industriel.

15. Procédé d'inhibition de la croissance de micro-organismes ou de réduction des micro-organismes dans des systèmes industriels tels que le traitement de la pâte à papier et la fabrication du papier ; les systèmes de traitement de l'eau ; l'eau de refroidissement ; les piscines et les spas ; les fontaines décoratives ; les membranes ; les pâturages de brasserie ; les applications pour toilette et pour urinoirs ; les installations sanitaires pour les aliments et les boissons ; les formulations sporicides ; la stérilisation des produits cliniques et des instruments chirurgicaux et des agents de préservation comprenant une suspension d'argile et de l'amidon, comprenant l'application d'une quantité efficace de la composition selon la revendication 1 au système industriel.

16. Produit de soins personnels, ménager ou industriel comprenant la composition selon la revendication 1.

17. Produit de soins personnels, ménager ou industriel qui comprend une quantité efficace d'un mélange d'un premier composant comprenant un ou plusieurs donneurs d'aldéhyde, d'un second composant comprenant du diméthylhydantoïne et d'un troisième composant comprenant de l'acide déhydro-acétique.

18. Produit selon la revendication 17, dans lequel le produit est un produit ménager ou industriel choisi parmi le groupe constitué de produits assouplissants, des détergents à lessive, des produits de nettoyage pour surfaces, de la peinture, du bois, de produits de traitement pour le bois, de carton, de panneaux de plâtre, de pâte à papier, de tuiles de plafond, de textiles, d'adhésifs, d'enduits d'étanchéité, de cuir, de corde, de plastiques, de pétrole, de carburant, d'huile et de fluides de travail pour du caoutchouc et des métaux.

19. Produit selon la revendication 17, dans lequel le produit est un produit de soins personnels choisi parmi le groupe constitué de shampooings, d'après-shampooings, de rinçages, de crèmes, de lotions, de produits cosmétiques, de savons, de bains de bouche, de pâtes dentifrices, de vaporisateurs, de nettoyants pour prothèses dentaires et de bains pour prothèses dentaires, de lingettes pour bébé et d'autres lingettes tissées ou non tissées.